# EUROPEAN PATENT APPLICATION

(11) **EP 2 034 306 A1**
(43) Date of publication of application: **11.03.2009**
(21) Application number: 07767760.7
(22) Date of filing: 28.06.2007
(51) Int. Cl.: G01N 31/00, G01N 21/78, G01N 31/22

(54) **INK COMPOSITION FOR DETECTING DISSOLVED OZONE AND METHOD OF DETECTING DISSOLVED OZONE**

(30) Priority: 29.06.2006 JP 2006180182
(71) Applicant: SAKURA COLOR PRODUCTS CORPORATION, Osaka-shi 537-0025 (JP)
(72) Inventor: SANO, Kyoko, Nara-shi Nara 630-8105 (JP); INOUE, Hiroshi, Higashiosaka-shi, Osaka 578-0901 (JP)
(74) Representative: Manley, Nicholas Michael
(86) International application number: PCT/JP2007/062965
(87) International publication number: WO 2008/001833

(57) **Abstract**

The invention provides an ink composition capable of more easily and accurately detecting or measuring dissolved ozone contained in a liquid to be examined, and to a method thereof. A method of detecting dissolved ozone contained in a liquid to be examined, comprising the steps of: (1) adding dropwise to the liquid to be examined an ink composition for detecting dissolved ozone that comprises water and at least one water-soluble dye selected from anthraquinone dyes, azo dyes, methine dyes, oxazine dyes, triarylmethane dyes, and xanthene dyes; and (2) verifying the occurrence of a color change of the ink composition.

## Description

### TECHNICAL FIELD

The present invention relates to an ink composition for detecting dissolved ozone, the ink composition added dropwise to a liquid to be examined to detect dissolved ozone contained in water. The present invention also relates to a method of detecting dissolved ozone, and a method of measuring the concentration of dissolved ozone.

### BACKGROUND ART

Various methods to detect dissolved ozone contained in ozone water have been proposed. Examples of known methods include titration methods using potassium iodide, colorimetric methods, indicator tube methods, electromotive force measurement methods, methods using an in-line ozone monitor, etc. (Patent Document 1 to 7, etc.).

The above measuring methods, however, have at least one disadvantage, such as (1) the great care required; (2) the need for special devices; (3) the relatively long time required; (4) low detection accuracy (cannot be quantified), etc.

One known method of detecting ozone gas is a method for measuring an ozone concentration that involves setting an ozone-detector card in an ozone atmosphere, and calculating CT values based on a color difference that develops due to a color change in a color-change layer or on an area of a color-changed portion therein (Patent Document 8). Such an ozone detector card can detect a CT value (ozone gas concentration X exposure time) of targeted ozone gas, but is inappropriate for detecting dissolved ozone in ozone water. Specifically, it is time-consuming for the ozone detector card to detect dissolved ozone; additionally, it is difficult for the ozone detector card to measure (quantify) a dissolved ozone concentration.
Patent Document 1: Japanese Unexamined Patent Publication No. H4-15543
Patent Document 2: Japanese Unexamined Patent Publication No. H8-30434
Patent Document 3: Japanese Unexamined Patent Publication No. H6-3266
Patent Document 4: Japanese Unexamined Patent Publication No. H6-308026
Patent Document 5: Japanese Unexamined Patent Publication No. H6-294735
Patent Document 6: Japanese Unexamined Patent Publication No. H11-14036
Patent Document 7: Japanese Unexamined Patent Publication No. H11-237372
Patent Document 8: Japanese Unexamined Patent Publication No. 2002-69344

### DISCLOSURE OF THE INVENTION

### Problems to be Solved by the Invention

A main object of the present invention is to provide an ink composition capable of easily and accurately detecting and measuring dissolved ozone that may be contained in a liquid to be examined, and a method thereof.

### Means for Solving the Problems

The present inventors conducted intensive research to solve the problems in the prior art, and found that the above object can be achieved using a specific aqueous solution. The invention was accomplished based on such findings.

Specifically, the present invention relates to the following ink composition for detecting dissolved ozone, and a method of detecting dissolved ozone.

Item 1: An ink composition for detecting dissolved ozone contained in a liquid to be examined, comprising water and at least one water-soluble dye selected from anthraquinone dyes, azo dyes, methine dyes, oxazine dyes, triarylmethane dyes, and xanthene dyes.

Item 2: The ink composition for detecting dissolved ozone according to Item 1, wherein the concentration of dye is from 0.01 wt.% to 10 wt.%.

Item 3: The ink composition for detecting dissolved ozone according to Item 1, further comprising a non-color change colorant.

Item 4: The ink composition for detecting dissolved ozone according to Item 1, which detects dissolved ozone by being added dropwise to a liquid to be examined.

Item 5: A method of detecting dissolved ozone contained in a liquid to be examined, comprising the steps of:
(1) adding dropwise to a liquid to be examined an ink composition, for detecting dissolved ozone, that comprises water and at least one water-soluble dye selected from anthraquinone dyes, azo dyes, methine dyes, oxazine dyes, triarylmethane dyes, and xanthene dyes; and
(2) verifying an occurrence of a color change of the ink composition.

Item 6: A method of measuring a dissolved ozone concentration of a liquid to be examined comprising the steps of:
(1) adding an ink composition, for detecting dissolved ozone, that comprises water and at least one water-soluble dye selected from anthraquinone dyes, azo dyes, methine dyes, oxazine dyes, triarylmethane dyes, and xanthene dyes, dropwise to a liquid to be examined having a known weight or volume, until the ink composition stops undergoing a color change;
(2) calculating an amount of ink consumed when the ink stops undergoing a color change; and
(3) calculating a dissolved ozone concentration in the examined liquid based on a previously prepared calibration curve that shows a relationship between the amount of ink and the dissolved ozone concentration.

### EFFECT OF THE INVENTION

According to the ink composition of the present invention, the existence of dissolved ozone can be detected by simply adding the ink composition dropwise (added) to a liquid to be examined, and verifying the occurrence of a color change (or a color disappearance) thereof. In particular, a color-change water-soluble dye of the present invention reacts with dissolved ozone, if the ozone exists, and instantaneously undergoes a color change or a color disappearance, making short-time detection possible.

Further, the dissolved ozone concentration of the examined liquid can be measured (quantified) based on a previously prepared calibration curve (showing a relationship between an amount of ink composition added dropwise and a dissolved ozone concentration), etc.

In view of the above, the ink composition, detection method, and measurement method of the present invention make it possible to relatively readily and easily perform the detection of dissolved ozone that may be contained in a liquid to be examined, and the measurement of a concentration of dissolved ozone therein.

### BEST MODE FOR CARRYING OUT THE INVENTION

### 1. Ink Composition for Detecting Dissolved Ozone

The ink composition for detecting dissolved ozone according to the present invention, which is used for detecting ozone contained in a liquid to be examined, comprises water and at least one water-soluble dye (hereunder sometimes referred to as a "color-change water soluble dye") selected from anthraquinone dyes, azo dyes, methine dyes, oxazine dyes, triarylmethane dyes, and xanthene dyes.

The anthraquinone dye usable herein is not limited as long as it has an anthraquinone nucleus and at least one amino group selected from primary and secondary amino groups. The dye may have two or more amino groups of the same or different kinds. Examples of the usable dyes include C. I. Acid Blue 56, C. I. Acid Blue 25, C. I. Acid Blue 47, C. I. Acid Blue 35, C. I. Acid Green 25, C. I. Acid Green 27, C. I. Acid Green 44, C. I. Acid Green 36, C. I. Acid Violet 34, C. I. Acid Violet 41, C. I. Acid Blue 23, C. I. Acid Blue 80, C. I. Acid Blue 138, C. I. Acid Violet 43, C. I. Acid Violet 48, C. I. Acid Red 81, C. I. Acid Red 83, and the like. Such anthraquinone dyes may be used singly or in a combination of two or more. Preferred among these anthraquinone dyes is at least one dye selected from C. I. Acid Blue 138, C. I. Acid Green 25, etc. In the present invention, by modifying the type (molecular structure, etc.) of such anthraquinone dyes, detection sensitivity can be controlled.

Azo dyes usable herein are not limited so long as they contain, as a chromophore, an azo group (-N=N-). Examples include monoazo dyes, polyazo dyes, metal complex salt azo dyes, stilbene azo dyes, thiazole azo dyes, etc. Specific examples include, by dye number, C. I. Basic Blue 65, C. I. Basic Blue 65, C. I. Basic Blue 54. C. I. Basic Red 69, C. I. Basic Red 88, C. I. Basic Blue 129, and the like. These can be used singly or in a combination of two or more.

Usable methine dyes may be any of those as long as they contain a methine group. Therefore, in the present invention, the methine dyes include polymethine dyes, cyanine dyes, etc. These can be suitably selected from known or commercially available methine dyes. Specific examples include C. I. Basic Red 12, C. I. Basic Red 13, C. I. Basic Red 14, C. I. Basic Red 15, C. I. Basic Red 27, C. I. Basic Red 35, C. I. Basic Red 36, C. I. Basic Red 37, C. I. Basic Red 45, C. I. Basic Red 48, C. I. Basic Yellow 11, C. I. Basic Yellow 12, C. I. Basic Yellow 13, C. I. Basic Yellow 14, C. I. Basic Yellow 21, C. I. Basic Yellow 22, C. I. Basic Yellow 23, C. I. Basic Yellow 24, C. I. Basic Violet 7, C. I. Basic Violet 15, C. I. Basic Violet 16, C. I. Basic Violet 20, C. I. Basic Violet 21, C. I. Basic Violet 39, C. I. Basic Blue 62, C. I. Basic Blue 63, and the like. These can be used singly or in a combination of two or more.

Usable triarylmethane dyes are not limited, and may be known or commercially available products. Examples include C. I. Basic Blue 1, C. I. Basic Blue 26, C. I. Basic Blue 5, C. I. Basic Blue 8, C. I. Basic Green 1, C. I. Basic Red 9, C. I. Basic Violet 12, C. I. Basic Violet 14, C. I. Basic Violet 3, and the like. These can be used singly or in a combination of two or more. Among these triarylmethane dyes, at least one dye selected from C. I. Basic Green 1, C. I. Basic Red 9, C. I. Basic Blue 1, etc. may be preferably employed.

Thiazine dyes usable herein are not limited, and may be selected from known or commercially available products. Examples include C. I. Basic Blue 9, C. I. Basic Blue 25, C. I. Basic Blue 24, C. I. Basic Blue 17, C. I. Basic Green 5, C. I. Solvent Blue 8, and the like. These can be used singly or in a combination of two or more. Preferably used among these thiazine dyes are C. I. Basic Blue 9, and the like.

Usable oxazine dyes are not limited, as long as the dye contains at least one oxazine ring having Formulas (I) to (III) below. Examples include monooxazine dyes that have one oxazine ring, and like dioxazine dyes that have two oxazine rings.

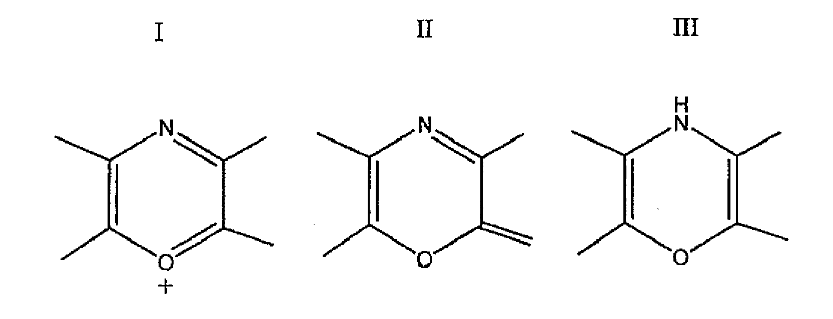

In the present invention, as an auxochrome, basic dyes comprising at least one substituted or unsubstituted amino group, etc., may be employed.

The oxazine dyes may be used singly or in a combination of two or more, and may be known or commercially available products. Preferable examples of the oxazine dyes include, by dye number, C. I. Basic Blue 3, C. I. Basic Blue 12, C. I. Basic Blue 6, C. I. Basic Blue 10, C. I. Basic Blue 96, and the like. More preferred among these are C. I. Basic Blue 3, etc.

Examples of xanthene dyes include C. I. Basic Violet 10, C. I. Basic Violet 11, C. I. Basic Red 3, C. I. Basic Red 4, C. I. Acid Red 50, C. I. Acid Red 52, C. I. Basic Violet 9, and the like. These xanthene dyes may be used singly or in a combination of two or more. Particularly preferred among these are C. I. Basic Violet 11, etc.

The concentration of color-change water soluble dye relative to the ink composition of the present invention may be suitably determined according to an ozone concentration of targeted ozone water, the measuring method, and the like. It is preferable that the concentration thereof usually be from 0.01 wt.% to 10 wt.%, in particular 0.1 wt.% to 2 wt.%.

In addition to the color-change water-soluble dye, the ink composition of the present invention may further contain, as necessary, a non-color change colorant (a non-color change colorant that does not undergo a color change upon exposure to ozone), an antiseptic, a mildew-proofing agent, a wetting agent, and the like.

Such a non-color change colorant usable herein may be suitably selected from a known non-color change water soluble dye. For example, at least one dye selected from Basic Yellow 2, Basic Yellow 13, Basic Yellow 21, Basic Yellow 92, and the like, may be employed. The color of the color-change water soluble dye used in the invention usually disappears upon reaction with ozone. Accordingly, when the liquid to be examined is transparent and the ink composition containing a non-color change water soluble dye is added thereto, the disappearance of the color of the color-change water soluble dye allows the liquid to exhibit the color of the non-color change water-soluble dye. The ink composition of the present invention is capable of detecting dissolved ozone by being added dropwise to a liquid to be examined. Specifically, the ink composition of the invention can be used by being added dropwise to a liquid to be examined. For means of a dropwise addition, known means such as, for example, addition using a dropper, addition using a pipette, etc. may be used.

### 2. Method for Detecting Dissolved Ozone

The present invention is directed to a method for detecting dissolved ozone contained in a liquid to be examined, comprising the steps of:
(1) adding dropwise to a liquid to be examined an ink composition, for detecting dissolved ozone, that comprises water and at least one water-soluble dye selected from anthraquinone dyes, azo dyes, methine dyes, oxazine dyes, triarylmethane dyes, and xanthene dyes; and
(2) verifying an occurrence of a color change of the ink composition.

In the first step, an ink composition, for detecting dissolved ozone, that comprises water and at least one water-soluble dye selected from anthraquinone dyes, azo dyes, methine dyes, oxazine dyes, triarylmethane dyes, and xanthene dyes (hereunder sometimes simply referred to as "ink") is added dropwise to a liquid to be examined.

The amount of each drop of the ink is not limited, but it may be usually suitably determined within the range of about 0.01 ml to about 1 ml (preferably about 0.03 ml to about 0.5 ml).

A preferable means for dropwise addition is means capable of supplying a constant amount of ink dropwise at regular intervals. For example, addition using a dropper, addition using a pipette, and other known means may be utilized.

The liquid to be examined is the targeted liquid of the detection method of the present invention. Particularly preferred therefor is an aqueous solution (e.g., ozone water). When such a liquid is ozone water (ozone-dissolved water), the ozone concentration therein is 0.05 wt.ppm or more, particularly from 0.05 wt.ppm to 4 wt.ppm, and preferably 0.1 wt.ppm to 1.5 wt.ppm.

In the second step, an occurrence of a color difference of the ink composition is verified. The color of the color-change water-soluble dye used in the invention usually disappears upon reaction with ozone (i.e., when a liquid to be examined is transparent, the ink color undergoes a change to transparent). By observing the occurrence of the color change (a color disappearance), the existence of dissolved ozone contained in the examined liquid can be verified. The occurrence of a color change may be visually confirmed. Alternatively, absorbance measurement method, a comparison method using colorimetric samples, etc., may be applied as necessary.

### 3. Method for Measuring Dissolved Ozone Concentration

The present invention is further directed to a method of measuring the concentration of dissolved ozone contained in a liquid to be examined, comprising the steps of:
(1) adding an ink composition for detecting dissolved ozone that comprises water and at least one water-soluble dye selected from anthraquinone dyes, azo dyes, methine dyes, oxazine dyes, triarylmethane dyes, and xanthene dyes, dropwise to a liquid to be examined having a known weight or volume, until the ink composition stops undergoing a color change;
(2) calculating an amount of ink consumed when the ink stops undergoing a color change; and
(3) calculating a dissolved ozone concentration in the liquid to be examined, based on a previously prepared calibration curve that shows a relationship between the amount of ink and the dissolved ozone concentration.

In the first step, an ink composition, for detecting dissolved ozone, that comprises water and at least one water-soluble dye selected from anthraquinone dyes, azo dyes, methine dyes, oxazine dyes, triarylmethane dyes, and xanthene dyes, is added dropwise to a liquid to be examined having a known weight or volume, until a color change of the ink composition is completed.

An amount of a liquid to be examined may be taken as a sample. Such an amount of the liquid may generally be about 15 mL to about 300 mL. The usable means of a dropwise addition to the liquid may be the same means mentioned above for detecting dissolved ozone.

In the second step, an amount of ink consumed when the ink stops undergoing a color change is measured. The completion of the color change may be visually verified. Alternatively, the same methods as the ones mentioned above for detecting dissolved ozone, such as an absorbance measurement method, etc., may be applied as necessary.

In the third step, a dissolved ozone concentration value is obtained based on a previously prepared calibration curve that shows a relationship between the amount of ink and the dissolved ozone concentration.

In preparation of the calibration curve, for example, the concentration of ozone-dissolved water is plotted on the ordinate, and the amount of ink consumed when the ink stops undergoing a color change against each concentration of ozone-dissolved water is plotted on the abscissa. With respect to this, the ozone concentration value corresponding to the amount of ink measured in the aforesaid second step is obtained. The above process makes it possible to confirm the ozone concentration, which was unknown.

### EXAMPLES

The present invention is described in further detail with reference to the following Examples. However, the present invention is not limited to the Examples.

### Examples 1 to 6

The following three types of aqueous dye solutions (ink compositions) (1) to (6) were prepared to be used as an ozone-water indicator. Specifically, each of the following dyes was sufficiently dissolved in ion exchange water, which was allowed to stand overnight. Then, the residue therein was removed by filtration. Each aqueous solution was thereby obtained.
(1) Aqueous azo dye solution (concentration: 1 wt.%) azo dyes: C. I. Basic Blue 65 in dye number
(2) Aqueous methine dye solution (concentration: 1 wt.%) methine dyes: C. I. Basic Orange 21 in dye number
(3) Aqueous oxazine dye solution (concentration: 1 wt.%) oxazine dyes: C. I. Basic Blue 3 in dye number
(4) Aqueous azo dye solution (concentration: 0.5 wt.%) azo dyes: C. I. Basic Blue 129 in dye number
(5) Aqueous methine dye solution (concentration: 0.5 wt.%) methine dye: C. I. Basic Violet 7 in dye number
(6) Aqueous azo dye + aqueous methine dye solution (concentration: 0.5 wt.%) azo dyes: C. I. Basic Blue 129 in dye number; methine dyes: C. I. Basic Violet 7 in dye number

### TEST EXAMPLE 1

The ozone-water indicator obtained in the Examples was added dropwise to ozone water (100 mL) whose concentration was unknown. Then, the following items were evaluated. The results are shown in Table 1. Table 1 also shows, as a comparison, the results of (1) a method using a commercially available card-type indicator; (2) a method using potassium iodide; (3) a colorimetric method; (4) a method using an indicator tube; and (5) an electromotive force measurement method.
(1) A preparation of a reagent etc. is required before detecting a concentration:
   If not required, "O"; if required, "X" is shown.
(2) Other device was required for detection:
   If not required, "O"; if required, "X" is shown.
(3) Difficulty of the detection operation:
   If no special technique required, "O"; if special technique required, "X" is shown.
(4) The time required for detection:
   If less than 3 minutes is required, "O"; if 3 minutes or more is required, "X" is shown.
(5) Evaluation difficulty:
   If there is high visibility, "O"; if there is low visibility, "X" is shown.
   If calculation, conversion, etc. are not required after detection, "O"; if calculation, conversion, etc. are required, "X" is shown. If concentration determination is possible, "O"; if not possible, "X" is shown.

**Table 1**

| | Examples | Comparative Examples | | | | |
|---|---|---|---|---|---|---|
| | Present Invention | Commercially Available Product (Card-Type) | Titration (Titrahion Using Potassium Iodide) | Other Company A (Colorimetric Method) | Other Company B (Indicator Tube) | Other Company C (Electromotive Force Measurement Method) |
| | | | | | | |
| (1) Preparation before detection (0: not required; X: required) | ○ | ○ | × | ○ | ○ | ○ |
| (2) Additional device for detection (0: not required; X: required) | ○ | ○ | × | × (Customized Colorimetric Device | ○ | Δ |
| (3) Difficulty of the detection operation (0: easy; X: complicated) | ○ | ○ | × | ○ | ○ | ○ |
| (Detection can be carried out by any person; or raquires no technique) | | | | | | |
| (4) Time consumed (0: less than 3 min.; X: 3 min. or more) | ○ (instantly) | × | × | ○ | × | ○ |
| (5) Evaluation Difficulty | | | | | | |
| Visibility (0: good; X: not good) | 0 (purple to transparent) | ○ (purple to yellow | ○ | Δ(Colorimetric Device Required) | × | ○ |
| Requires calculation or conversion, etc. after detection (0: not required; X: required) | ○ | ○ | × | ○ | ○ | ○ |
| Concentration determination (0: possible; X: impossible) | ○ | × | ⊚ | ○ (0.2 to 1.5 ppm) | ○ | Δ (0. 5 ppm unit) |
| | | | | | | |
| | | | | | | |
| Effect | | | | | | |
| | | | | | | |
| | | | | | | |

| | | | | | | |
|---|---|---|---|---|---|---|
| Detection takes a long time Concentration cannot be determined. | | | | | | |

### TEST EXAMPLE 2

The ozone-water indicator (aqueous azo dyes solution (1)) obtained in the Example was added dropwise with stirring to three types of concentration-unknown ozone waters 1 to 3 (100 mL). The amount of drops of the ozone-water indicator consumed when the ozone water underwent a color change was visually measured. Thereafter, the concentrations of the ozone water were measured based on a previously prepared calibration curve (the amount of drops - the ozone concentration) for the indicators. Table 2 shows the results, along with the actual measured result of a method using potassium iodide.

**Table 2**

| | Drop Amount Consumed When the Ink Underwent a Color Change | Ozone Concentration Obtained Based on the Calibration Curve | Ozone Concentration Actually Measured |
|---|---|---|---|
| Ozone Water 1 | 0.21 g | 4.3 ppm | 4.0 ppm |
| Ozone Water 2 | 0.1 g | 2.1 ppm | 2.0 ppm |
| Ozone Water 3 | 0.08 g | 1.6 ppm | 1.5 ppm |

### TEST EXAMPLE 3

The ozone-water indicator (aqueous azo dye + aqueous methine dye solution (6)) obtained in the Example was added dropwise with stirring to three types of concentration-unknown ozone water 4 to 6 (100 mL). The amount of drops of the ozone-water indicator consumed when the ozone water underwent a color change was visually measured. Thereafter, the concentrations of the ozone water were measured based on a previously prepared calibration curve (the amount of drops - the ozone concentration) for the indicators. Table 3 shows the results along with the actual measured result of a method using potassium-iodide.

**Table 3**

| | Drop Amount Consumed When the Ink Underwent a Color Change | Ozone Concentration Obtained Based on the Calibration Curve | Ozone Concentration Actually Measured |
|---|---|---|---|
| Ozone Water 4 | 0.43 g | 2.5 ppm | 2.5 ppm |
| Ozone Water 5 | 0.35 g | 2.1 ppm | 2.0 ppm |
| Ozone Water 6 | 0.14 g | 0.8 ppm | 0.8 ppm |

As is clear from the results above, the obtained measured values of the indicator of the present invention are almost the same as the values actually measured. It is thus clear that the indicators of the invention can measure an ozone water concentration more easily.

## Claims

1. An ink composition for detecting dissolved ozone contained in a liquid to be examined, comprising water and at least one water-soluble dye selected from anthraquinone dyes, azo dyes, methine dyes, oxazine dyes, triarylmethane dyes, and xanthene dyes.

2. The ink composition for detecting dissolved ozone according to Claim 1, wherein the concentration of dye is from 0.01 wt.% to 10 wt.%.

3. The ink composition for detecting dissolved ozone according to Claim 1, further comprising a non-color change colorant.

4. The ink composition for detecting dissolved ozone according to Claim 1, which detects dissolved ozone by being added dropwise to a liquid to be examined.

5. A method of detecting dissolved ozone contained in a liquid to be examined, comprising the steps of:
(1) adding dropwise to a liquid to be examined an ink composition, for detecting dissolved ozone, that comprises water and at least one water-soluble dye selected from anthraquinone dyes, azo dyes, methine dyes, oxazine dyes, triarylmethane dyes, and xanthene dyes; and
(2) verifying an occurrence of a color change of the ink composition.

6. A method of measuring a dissolved ozone concentration of a liquid to be examined comprising the steps of:
(1) adding an ink composition, for detecting dissolved ozone, that comprises water and at least one water-soluble dye selected from anthraquinone dyes, azo dyes, methine dyes, oxazine dyes, triarylmethane dyes, and xanthene dyes, dropwise to a liquid to be examined having a known weight or volume, until the ink composition stops undergoing a color change;
(2) calculating an amount of ink consumed when the ink stops undergoing a color change; and
(3) calculating a dissolved ozone concentration in the examined liquid based on a previously prepared calibration curve that shows a relationship between the amount of ink and the dissolved ozone concentration.
